# EUROPÄISCHE PATENTSCHRIFT

(11) **EP 2 166 265 B1**
(45) Veröffentlichungstag und Bekanntmachung des Hinweises auf die Patenterteilung: **24.04.2013**
(21) Anmeldenummer: 09170621.8
(22) Anmeldetag: 17.09.2009
(51) Int. Cl.: F16L 3/10

(54) **Rohrschelle mit verbessertem Verschluss**
Pipe clip with improved lock
Collier doté d'une fermeture améliorée

(30) Priorität: 17.09.2008 DE 102008047787
(43) Veröffentlichungstag der Anmeldung: 24.03.2010
(73) Patentinhaber: Sinn, Edgar Emil, 56587 Strassenhaus (DE)
(72) Erfinder: Sinn, Edgar Emil, 56587 Strassenhaus (DE)
(74) Vertreter: Schrooten, Rolf

(56) Entgegenhaltungen:
- EP-A1- 0 523 383
- EP-A2- 0 671 579
- DE-U1- 8 806 714

## Beschreibung

Die Erfindung betrifft eine Rohrschelle nach dem Oberbegriff von Anspruch 1. Eine derartige Rohrschelle hat einen zumindest im Wesentlichen ringförmig ausgebildeten Schellenkörper, der zum Befestigen von Rohren an einer Wand oder Decke ein Rohr umschließen kann. Zum Einlegen des Rohrs hat der Schellenring an einer Stelle seines Umfangs eine Unterbrechung, wobei beiderseits dieser Unterbrechung jeweils ein in etwa radial nach außen stehender Spannflansch vorgesehen ist. Diese beiden Spannflansche können zum Festspannen eines in die Rohrschelle eingelegten Rohres durch eine Spannschraube zusammengespannt werden. Dazu weist der erste Spannflansch eine vom Schaft der Spannschraube durchgriffene Durchstecköffnung auf, während der zweite Spannflansch, der auch als Gabel bezeichnet wird, einen radial nach außen offenen Schlitz hat, in welchen der Schaft der Spannschraube beim Schließen der Rohrschelle hineingeschwenkt werden kann.

Um eine besonders einfache Montage der anzubringenden Rohre zu ermöglichen, ist es bekannt, derartige Rohrschellen mit einem Klick-Verschluss zu versehen, der ein automatisches Einklicken der Spannschraube in die Rohrschellengabel ermöglicht. Dazu sind die freien Enden der Gabel bzw. des zweiten Spannflanschs schräg vom ersten Spannflansch wegweisend abgerundet oder abgebogen, so dass ein Zudrücken der Rohrschelle zunächst ein nach außen gerichtetes Schwenken der Spannschraube bewirkt, wenn der Schraubenkopf mit den abgeschrägten Enden der Gabel in Kontakt kommt. Der Schraubenkopf weicht dabei soweit nach außen aus, bis der Schraubenkopf der Spannschraube den äußeren Rand des zweiten Spannflanschs passiert hat.

Danach wird die Spannschraube durch ein federelastisches Rückstellelement wieder nach innen zurückgeschwenkt, so dass der Schraubenschaft sich in dem Schlitz des zweiten Spannflanschs befindet. Das elastisch federnde Rückstellelement wirkt dabei auf ein Gewindeelement, in das die Spannschraube eingeschraubt ist und zum endgültigen Festspannen eines in die Rohrschelle eingelegten Rohres weiter eingeschraubt werden kann.

Derartige Rohrschellen, die eine besonders komfortable Möglichkeit der Vormontage durch einfaches Zuklicken des Schellenkörpers bieten, so dass ein in die Rohrschelle eingelegtes Rohr bereits vor dem endgültigen Festspannen sicher gehalten wird und dennoch weiterhin leicht in seine endgültige Position verschoben werden kann, sind beispielsweise aus der DE 198 35 320 A1, von der die vorliegende Anmeldung ausgeht, bekannt. Das Gewindeelement ist dort durch ein Gewindeblech gebildet, dessen Rand von einem das Rückstellelement bildenden Gummiring übergriffen wird.

Auch aus der DE 10 2004 051 234 B4 ist eine derartige Rohrschelle bekannt, wobei eine federnd an einem Schellenbügel befestigte Platte vorgesehen ist, die das Gewindeelement bildet. Außerdem ist die Platte mit einer Vorrichtung zur Aufnahme eines Federelements versehen, welches die Platte gegen den entsprechenden Spannflansch drückt.

Aus der DE 100 03 183 A1 ist eine Rohrschelle mit einem elastischen Mittel zum Halten der Spannschraube bekannt, wobei der Schaft der Spannschraube zur Ermöglichung der Verschwenkbarkeit mit einem verjüngten Abschnitt versehen ist, der in ein Innengewinde eingreift, welches am Spannflansch des Schellenkörpers ausgebildet ist. Das Gewindeelement wird hierbei also unmittelbar durch den Spannflansch gebildet.

Bei allen diesen vorbekannten Rohrschellen ist es von Nachteil, dass das Gewindeelement jeweils nur sehr dünn ausgebildet ist und daher nur sehr wenige Gewindegänge aufweisen kann. Deshalb ist die hierbei erreichbare endgültige Haltekraft für in die Rohrschelle eingespannte Rohre entsprechend begrenzt, so dass ein sicherer Halt der Rohre nicht dauerhaft gewährleistet ist.

Aus der DE 82 17 482 U1 ist eine Rohrschelle mit einem zylindrischen Gewindeelement bekannt, das in einem als erster Spannflansch halbkreisförmig zurückgebogenen Endabschnitt des Schellenkörpers einliegt. Das hier als Stift ausgebildete Gewindeelement ist dabei zwar dicker und daher auch mit mehreren Gewindegängen ausgeführt, aber diese im Querschnitt kreisrunde Ausführungsform des Gewindeelements erlaubt keine Beaufschlagung durch ein Rückstellelement. Daher ist bei einer derartigen Ausführungsform einer Rohrschelle kein eingangs beschriebener Klick-Verschluss möglich, welcher eine einfache Montage mit automatischem Einklicken der Spannschraube in die Rohrschellengabel beim Schließen der Rohrschelle erlaubt.

Eine ähnliche Ausführungsform ist auch aus der EP 0 523 383 A1 bekannt. Auch bei dieser Rohrschelle bildet ein zylindrischer Zapfen, der in einer an einer Schellenhälfte ausgebildeten buchsenförmigen Aufnahme gelagert ist, eine Schwenkachse aus, um die ein mit dem Zapfen verbundener Gewindebolzen mit zugehörigem Gewindeelement schwenkbar ist, um den Spannflansch der anderen Schellenhälfte festspannen zu können. Auch hier ist eine Beaufschlagung des Gewindeelements durch ein Rückstellelement zur Erzielung eines Klick-Verschlusses nicht möglich.

Ferner ist aus der DE 88 06 714 U1 eine Rohrschelle mit einem durch eine Mutter gebildeten Gewindeelement bekannt, welches von einer Federklammer derart belastet ist, dass ein gewisser klickartiger Verschluss der Rohrschelle erzielt wird. Allerdings wird hierbei ein sehr großer Kraftaufwand benötigt um die Spannschraube zu verschwenken, da die Federklammer stets auf die parallel zum Spannflansch ausgerichtete, gegenüberliegende Stirnseite der Mutter drückt. Für eine Auslenkung der Spannschraube und eine damit verbundene Schrägstellung der Mutter müssen vom Monteur nicht nur beim Öffnen, sondern vor allem auch beim Schließen der Rohrschelle aufgrund der ungünstigen Hebelverhältnisse zwischen der Mutter, dem Spannflansch und der Federklammer große Kräfte aufgebracht werden, die eine einfaches Handling und eine leichte und schnelle Einsetzbarkeit der Rohrschelle verhindern.

Aus der EP 0 671 579 A2 ist eine Rohrschelle bekannt, bei der eine flache Mutter für die Spannschraube in einer Ausnehmung eines federelastischen Halteelements aufgenommen ist, welches relativ zum Spannflansch auslenkbar ist. Zusätzlich kann sich die Mutter dabei auch noch innerhalb der Ausnehmung relativ zu dem Halteelement verkannten, um beim Schließen der Rohrschelle eine zum Vorbeidrücken an der Gabel des anderen Spannflanschs ausreichend weite Auslenkung der Spannschraube zu ermöglichen. Dieses Verkannten der Mutter ist ebenfalls mit einem relativ großen Kraftaufwand verbunden, der beim Schließen der Rohrschelle zur Auslenkung der Spannschraube aufgebracht werden muss. Außerdem geht diese Art der Verkanntung der Mutter mit einem bestimmten Spiel innerhalb der Ausnehmung des Halteelements einher, so dass die Position der Mutter beim Festspannen der Rohrschelle nicht eindeutig festliegt und daher variieren kann.

Aufgabe der vorliegenden Erfindung ist es, eine Rohrschelle der eingangs genannten Art auf konstruktiv einfache Weise so zu verbessern, dass sie mit geringem Kraftaufwand leicht zu Öffnen und zu Schließen ist und trotzdem auch bei einer einfach durchzuführenden Vormontage hohe Spannkräfte ermöglicht, so dass auch schwerere Rohre dauerhaft sicher gehalten werden können.

Diese Aufgabe wird erfindungsgemäß durch eine Rohrschelle nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass das Gewindeelement in der Form eines Halbzylinders bzw. einer halben Rolle mit einer konvexen Kontur auf einer Seite und einer gegenüberliegenden Flachseite ausgebildet ist, wobei entweder die konvexe Kontur oder die Flachseite des Gewindeelements kraftschlüssig mit dem Rückstellelement zusammenwirkt, und dass in dem das Gewindeelement abstützenden ersten Spannflansch oder in dem auf das Gewindeelement einwirkenden Rückstellelement eine konkave Ausnehmung ausgeformt ist, in welcher das Gewindeelement mit seiner konvexen Kontur einliegt. Hierdurch wird eine wesentlich dickere Ausführungsform des Gewindeelements als bei den vorbekannten plattenförmigen oder durch Blechteile gebildeten Gewindeelementen ermöglicht, so dass darin ein Gewinde mit einer Mehrzahl von Gewindegängen eingebracht werden kann. Gleichzeitig ermöglicht das formschlüssige Zusammenspiel der konkaven Ausnehmung des Spannflanschs oder des Rückstellelements mit der konvexen Kontur des Gewindeelements eine optimale Schwenkbewegung der Spannschraube durch Drehen und/oder Abrollen, so dass die Klick-Funktion zum Ausführen der Vormontage besonders leicht mit sehr geringem Kraftaufwand ausgeführt werden kann. Insgesamt ermöglicht die erfindungsgemäße Ausbildung ein besonders leichtgängiges Abrollen des Gewindeelements in der konkaven Ausnehmung sowie einen besonders sicheren Halt des Gewindeelements in der zurückgeschwenkten Position.

Gemäß einer ersten, besonders bevorzugten Ausführungsform der Erfindung ist vorgesehen, dass die konkave Ausnehmung in dem ersten Spannflansch des Schellenkörpers ausgeformt ist, wobei die darin einliegende konvexe Kontur des Gewindeelements auf der dem Schraubenkopf der Spannschraube zugewandten Seite ausgebildet ist. Die Abrollbewegung und/oder Drehbewegung beim Öffnen und Schließen der Rohrschelle findet dabei zwischen dem Gewindeelement und dem Spannflansch des Schellenkörpers statt, was eine besonders leichtgängige Funktion mit einem geradezu harmonischen Bewegungsablauf erlaubt.

Gemäß einer alternativen Ausführungsform der Erfindung ist die konkave Ausnehmung in einem Federbereich des Rückstellelements, mit dem es auf das Gewindeelement einwirkt, vorgesehen, wobei die darin einliegende konvexe Kontur des Gewindeelements auf der von dem Schraubenkopf der Spannschraube abgewandten Seite ausgebildet ist. Die Abrollbewegung und/oder Drehbewegung beim Öffnen und Schließen der Rohrschelle findet dabei zwischen dem Gewindeelement und dem Rückstellelement statt, was ebenfalls eine relativ leichtgängige Funktionsweise gestattet.

Besonders vorteilhaft ist es bei allen Varianten, wenn das in das Gewindeelement eingebrachte Innengewinde mindestens drei, vorzugsweise vier bis fünf Gewindegänge aufweist. Hierdurch können besonders hohe Spannkräfte zum Festspannen von Rohren erreicht werden, so dass auch schwerere Rohrleitungen dauerhaft sicher in der Rohrschelle befestigt werden können.

Von Vorteil ist es ferner, wenn das federelastische Rückstellelement durch eine im Wesentlichen U-förmig oder V-förmig gebogene Federklammer gebildet ist, die radial von außen auf den ersten Spannflansch aufgeschoben ist. Dabei kann die Federklammer, die aus Federstahl oder aus Kunststoff besteht, vorzugsweise formschlüssig und/oder kraftschlüssig an dem ersten Spannflansch der Rohrschelle gehalten sein.

Besonders Vorteilhaft ist es dabei, wenn der dem zweiten Spannflansch zugewandte Bügel der U-förmigen Federklammer einen zu seinem nach innen weisenden freien Ende hin offenen Schlitz oder eine Öffnung, insbesondere ein Langloch, aufweist, in den der Schaft der Spannschraube eingereift, bzw. durch die der Schaft der Spannschraube hindurchgeht. Auf diese Weise wird nicht nur eine einfache Montierbarkeit der Federklammer, sondern auch eine ungehinderte Schwenkbewegung der Spannschraube ermöglicht. In dem anderen Bügel der Federklammer, das form- und/oder kraftschlüssig mit dem Gewindeelement zusammenwirkt, kann eine Öffnung, vorzugsweise ein Langloch ausgebildet sein, in das das Ende des Schraubenschafts eingreift.

Für einen besonders einfachen Halt des Gewindeelements an dem Spannflansch ist es bei der ersten oben genannten Ausführungsalternative von Vorteil, wenn der mit der Flachseite des Gewindeelements kraftschlüssig zusammenwirkende erste Bügel der Federklammer an seinen beiden Stirnseiten jeweils einen Haltesteg aufweist, der zum Gewindeelement hin vorsteht, so dass das Gewindeelement in axialer Richtung formschlüssig zwischen den beiden Haltestegen festgehalten wird. Vorzugsweise können die Haltestege aus dem Bügel der Federklammer ausgestanzt sein.

Bei der zweiten oben genannten Ausführungsalternative hingegen kann der an dem ersten Spannflansch anliegende zweite Bügel der Federklammer an seinen beiden Seiten jeweils einen zum ersten Spannflansch hin vorstehenden Haltesteg aufweist, zwischen denen der erste Spannflansch in axialer Richtung formschlüssig gehalten ist. Hierdurch kann ein besonders einfacher Halt der Federklammer erreicht werden.

Besonders vorteilhaft ist es bei der ersten oben genannten Ausführungsalternative ferner, wenn der dem zweiten Spannflansch zugewandte Bügel der Federklammer einen konkav ausgeformten Bereich aufweist, der auf der Rückseite der konkaven Ausnehmung des ersten Spannflanschs anliegt. Hierdurch können die Kräfte zum elastischen Rückschwenken der Spannschraube besonders gut auf das Gewindeelement aufgebracht werden.

Vorteilhafterweise ist der Schellenkörper bei allen Varianten zweiteilig mit zwei voneinander getrennten Schellenhälften ausgeführt, die durch Verbindungsmittel gelenkig miteinander verbunden sind. Die Verbindungsmittel können beispielsweise durch den beiden Spannflanschen gegenüberliegend angeordnete, ineinander verhakte Flansche gebildet sein oder eine zweite Schraube umfassen. Zur Befestigung der Rohrschelle an einer Decke oder Wand ist an einer Schellenhälfte eine Anschlussmutter vorgesehen.

Besonders vorteilhaft ist es bei allen Varianten ferner, wenn der Schlitz im Spannflansch der zweiten Schellenhälfte an zumindest einer seiner beiden ihn begrenzenden Längsseitenkanten eine Ausbuchtung aufweist, in die der Schaft der Spannschraube bei der in den Schlitz hineingeschwenkten Position der Spannschraube zumindest teilweise eingreift. Dazu ist die Spannschraube am anderen Spannflansch nicht mittig, sondern seitlich leicht zu der Seite versetzt, an der sich die Ausbuchtung im anderen Spannflansch befindet. Auf diese Weise kann eine weitere Sicherung gegen unbeabsichtigtes Öffnen der Rohrschelle erzielt werden.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: dreidimensionale Ansicht einer ersten Ausführungsform einer erfindungsgemäßen Rohrschelle;
- Figur 2:: dreidimensionale Ansicht des Gewindeelements mit eingeschraubter Spannschraube aus Figur 1;
- Figur 3:: dreidimensionale Ansicht des Rückstellelements der Rohrschelle aus Figur 1;
- Figur 4:: dreidimensionale Ansicht der Unterseite des Rückstellelements aus Figur 3;
- Figur 5:: schematische Darstellung der Funktionsweise des erfindungsgemäßen Klick-Verschlusses bei der Rohrschelle aus Figur 1 in einer ersten Position;
- Figur 6:: schematische Darstellung des Klick-Verschlusses aus Figur 5 in einer zweiten Position; und
- Figuren 7: bis 12: den Figuren 1 bis 6 entsprechende Darstellungen für eine zweite Ausführungsform einer erfindungsgemäßen Rohrschelle.

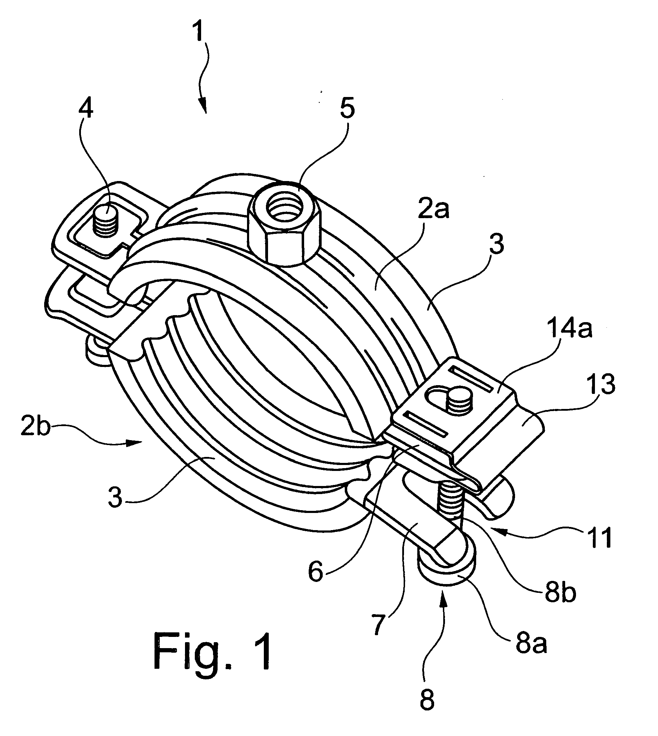

Die in Figur 1 dargestellte erfindungsgemäße Rohrschelle 1 hat einen Schellenkörper, der in an sich bekannter Weise aus zwei getrennt voneinander ausgeführten Schellenhälften 2a und 2b besteht, die innenseitig jeweils mit einem Profilgummi 3 verkleidet sind. Die beiden Schellenhälften 2a, 2b sind über eine Schraube 4 gelenkig miteinander verbunden. An der in Figur 1 oben liegenden ersten Schellenhälfte 2a ist eine Anschlussmutter 5 befestigt, über die die Rohrschelle 1 beispielsweise an einer Wand oder Decke montiert werden kann.

An den der Schraube 4 gegenüberliegenden Enden weisen die beiden Schellenhälften 2a, 2b jeweils einen Spannflansch 6 bzw. 7 auf, die in an sich bekannter Weise durch eine metrische Spannschraube 8 derart zusammengespannt werden können, dass die beiden Spannflansche 6, 7 zwischen dem Schraubenkopf 8a der Spannschraube 8 einerseits und einem Gewindeelement 9, in das die Spannschraube 8 mit ihrem Schaft 8b eingeschraubt ist, zusammengedrückt werden. Dazu weist der Spannflansch 6 der ersten Schellenhälfte 2a eine Durchstecköffnung 10 und der Spannflansch 7 der zweiten Schellenhälfte 2b einen nach außen offenen Schlitz 11 auf, die jeweils von dem Schraubenschaft 8b durchgriffen sind.

Erfindungsgemäß ist in dem Bereich der Durchstecköffnung 10 des Spannflanschs 6 eine konkave Ausnehmung 12 ausgeformt, die sich in Richtung zu dem gegenüberliegenden Spannflansch 7 der zweiten Schellenhälfte 2b wölbt. In dieser Ausnehmung 12 liegt das halbzylinderförmig ausgebildete Gewindeelement 9 mit seiner durch die runde Seitenwandung gebildeten konvexen Außenkontur 9a ein. Auf diese Weise ist eine besonders gute Verdrehbarkeit des Gewindeelements 9 in der konkaven Ausnehmung 12 und damit eine leichte Verschwenkbarkeit der Spannschraube 8 beim Schließen der Rohrschelle 1 gewährleistet.

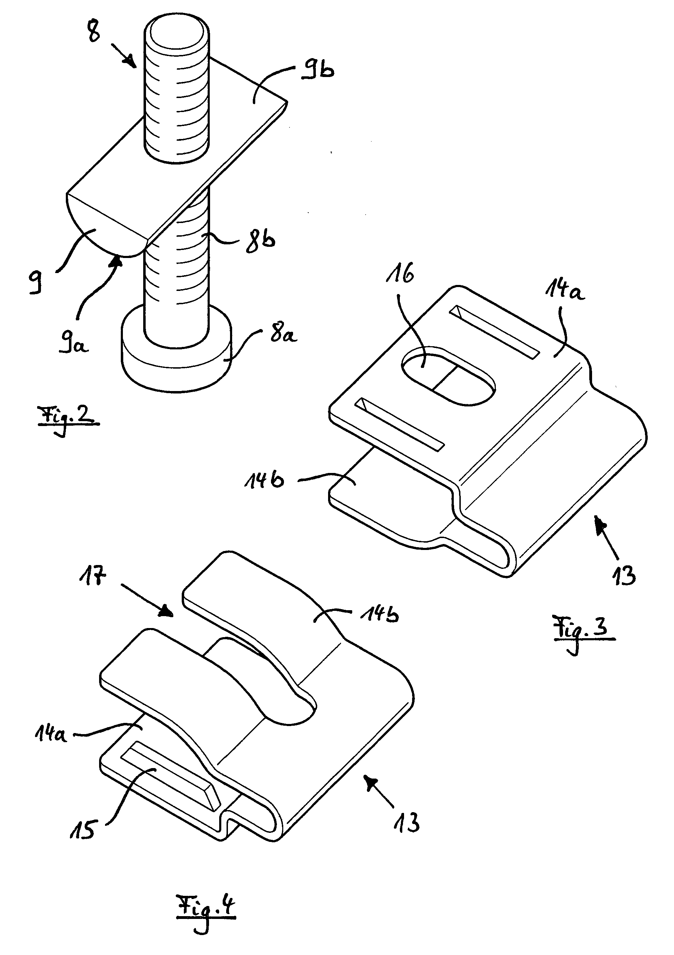

Auf der der konvexen Kontur 9a gegenüberliegenden Seite 9b ist das Gewindeelement 9 flach ausgebildet. Zwischen dieser Flachseite 9b und der konvexen Kontur 9a erstreckt sich das Innengewinde des Gewindeelements 9, welches aufgrund der hierbei erreichbaren Höhe mit vier bis fünf Gewindegängen ausgeführt sein kann und somit besonders hohe Spannkräfte bei dauerhaft sicherem Halt erlaubt (Figur 2).

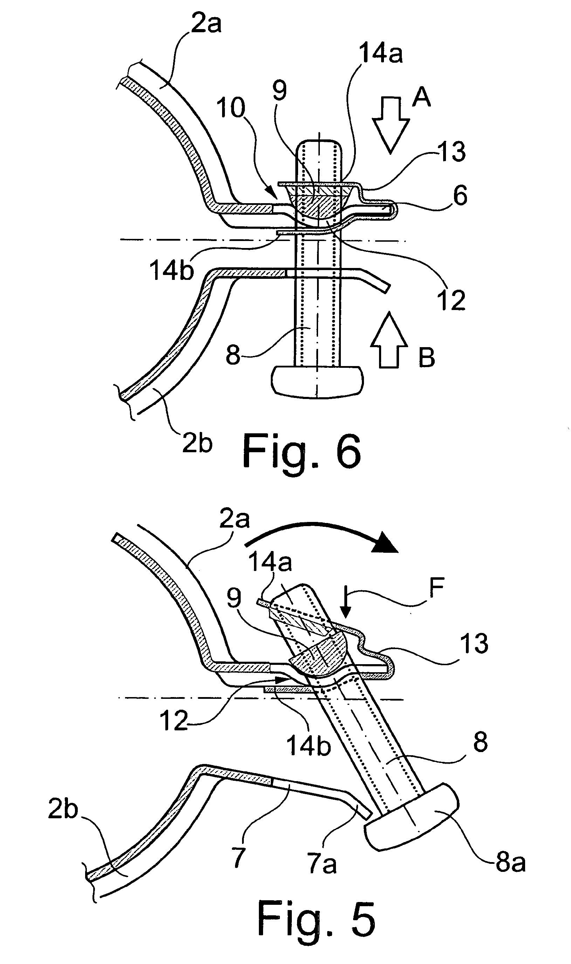

Auf den Spannflansch 6 ist ein federelastisches Rückstellelement 13 aufgeschoben, das aus einem im Wesentlichen U-förmig gebogenen Federstahlstreifen mit zwei Bügeln 14a und 14b besteht (Figuren 3 und 4). Der in Figur 1 und Figur 3 oben befindliche erste Bügel 14a wirkt dabei kraft- und formschlüssig auf die Flachseite 9b des Gewindeelements 9 ein, wodurch das Gewindeelement 9 in Richtung zu der in Figur 6 dargestellten Montageposition beaufschlagt wird. Dabei ist das Gewindeelement 9 in axialer Richtung formschlüssig zwischen zwei Haltestegen 15 gehalten, die in geringer Entfernung von den beiden Stirnseiten des Rückstellelements 13 aus dem ersten Bügel 14a ausgestanzt sind und in Richtung zum zweiten Bügel 14b vorstehen. Zwischen den beiden Haltestegen 15 ist ein Langloch 16 im ersten Bügel 14a eingebracht, während der gegenüberliegende zweite Bügel 14b des Rückstellelements 13 mit einem zu seinem freien Ende hin offenen Schlitz 17 ausgeführt ist. Der Schaft 8b der Spannschraube 8 greift dabei sowohl durch den Schlitz 17 als auch durch das Langloch 16 hindurch.

Beim Schließen der Rohrschelle 1, das nach dem Einlegen eines Rohres durch einfaches Zusammendrücken der beiden Schellenhälften 2a und 2b erfolgen kann, drückt der abgeschrägte Endbereich 7a des Spannflanschs 7 den Schraubenkopf 8a zunächst soweit nach außen, bis er innen an dem Schraubenkopf 8 vorbei weiter in Richtung gegen den anderen Spannflansch 6 gedrückt werden kann. Dabei wird die in das Gewindeelement 9 eingeschraubte Spannschraube 8 durch eine Drehbewegung des Gewindeelements 9 in der konkaven Ausnehmung 12 nach außen verschwenkt (Figur 5). In dieser Position ist die vom ersten Bügel 14a des Rückstellelements 13 auf die obere Kante der Flachseite 9b des Gewindeelements 9 ausgeübte Druckkraft F maximal und bewirkt ein Zurückdrehen des Gewindeelements 9 und somit ein Zurückschwenken der Spannschraube 8 in die in Figur 6 gezeigte Vormontage-Position, sobald der Schraubenkopf 8 den äußeren Rand des abgeschrägten Endbereichs 7a des zweiten Spannflanschs 7 passiert hat. Die Rückdrehbewegung des Gewindeelements 9 bzw. die Rückschwenkbewegung der Spannschraube 8 erfolgt dabei so weit, bis die Flachseite 9b des Gewindeelements 9 flächig an dem ersten Bügel 14a des Rückstellelements 13 anliegt (Figur 6).

Auf diese Weise wird ein sicher positionierbarer Klickverschluss geschaffen, der eine hohe Sicherheit gegen ein ungewolltes Öffnen bietet und somit eine komfortable Ausrichtung von in die Rohrschelle 1 eingelegten Rohren vor dem endgültigen Schließen der Rohrschelle 1 ermöglicht. Zum endgültigen Festspannen eines eingelegten Rohres wird abschließend die Spannschraube 8 und gegebenenfalls auch die Schraube 4 an den gegenüberliegenden Enden der beiden Schellenhälften 2a, 2b weiter eingeschraubt. Aufgrund des erfindungsgemäß verbesserten Gewindeelements 9 mit einer Vielzahl von Gewindegängen können hierbei besonders hohe Spannkräfte erzielt werden, die dauerhaft sicher erhalten bleiben.

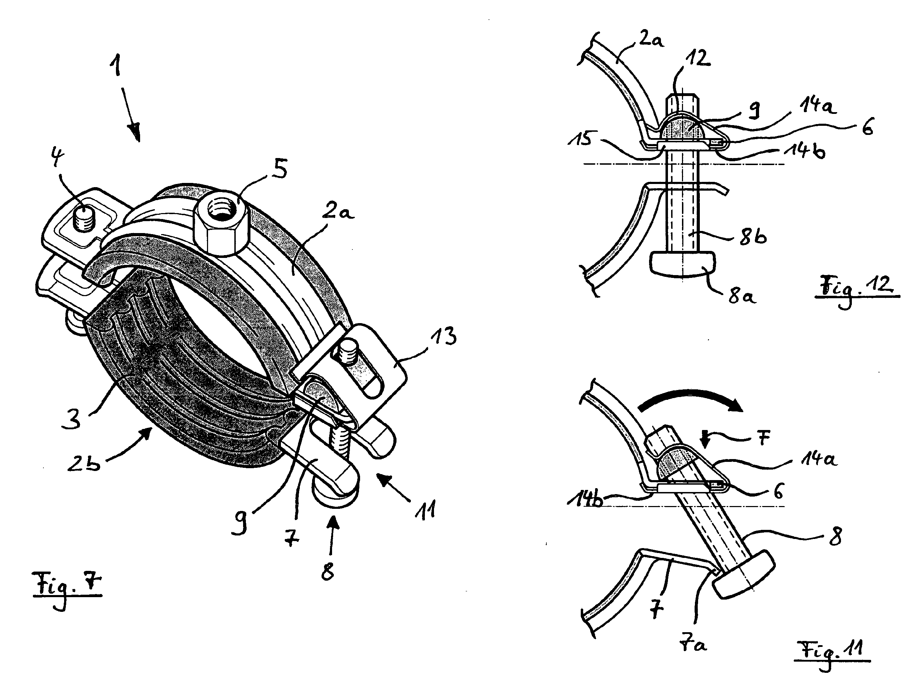

Während sich die Figuren 1 bis 6 auf die erste oben beschriebene Ausführungsalternative beziehen, entspricht die in den Figuren 7 bis 12 dargestellte Variante der oben beschriebenen zweiten Ausführungsalternative.

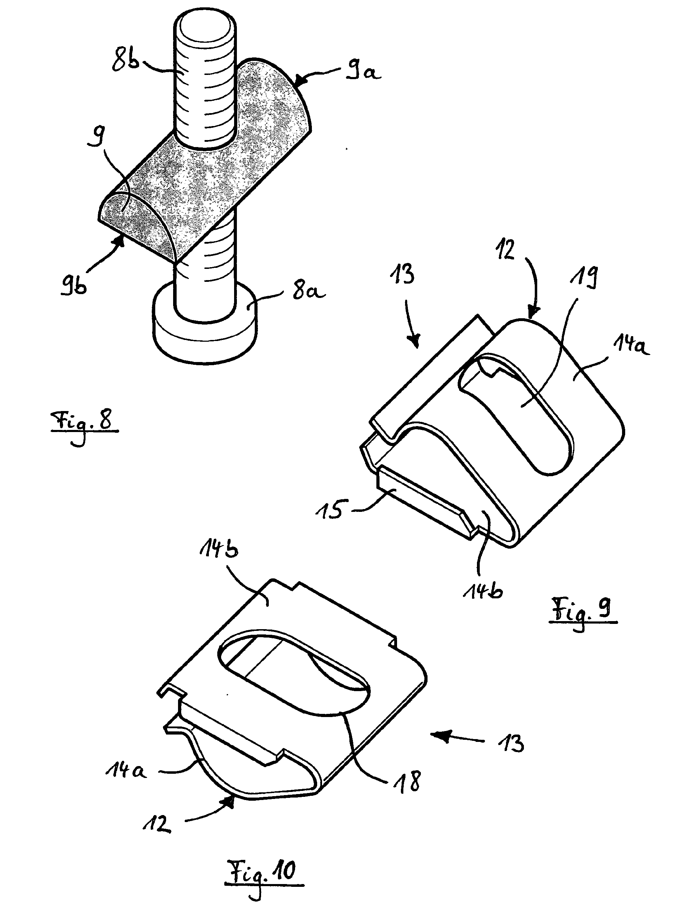

Auch diese zweite Ausführungsalternative hat ein halbzylinderförmig ausgebildete Gewindeelement 9, das mit seiner durch die runde Seitenwandung gebildeten konvexen Außenkontur 9a in einer konkaven Ausnehmung 12 einliegt. Allerdings ist das Gewindeelement 9 hier umgekehrt angeordnet, wobei die konkave Ausnehmung in den ersten Bügel 14a des Rückstellelements 13 eingeformt ist, wohingegen die Flachseite 9b auf dem ersten Spannflansch 6 aufliegt (Figur 12). Mit der zum Schellenkörper weisenden Kante 19 kann das halbzylinderförmige Gewindeelement 9 um diesen Spannflansch 6 schwenken (Figur 11). Die Flachseite 9b ist hier dem Schraubenkopf 8a der Spannschraube 8 zugewandt (Figur 8).

Das Rückstellelement 13 ist hier als eine im wesentlichen V-förmige Federklammer ausgebildet, wobei in einem (14a) der beiden Arme 14a und 14b die konkave Ausnehmung 12 eingeformt ist. An dem anderen Arm 14b stehen seitlich zwei Haltestege 15 vor, zwischen denen der Spannflansch 6 aufgenommen ist, so dass das Rückstellelement 13 axial formschlüssig daran gehalten ist. Zwischen den beiden Haltestegen 15 ist ein Langloch 18 vorgesehen (Figur 10), durch das der Schraubenschaft 8b der Spannschraube 8 hindurchgeht. In dem mit der konkaven Ausnehmung 12 versehenen ersten Arm 14a ist auch ein Langloch 19 ausgespart (Figur 9), durch das der Schraubenschaft 8b der Spannschraube 8 ebenfalls hindurchgeht (Figur 7).

## Patentansprüche

1. Rohrschelle (1) mit einem Schellenkörper, der zwei in etwa radial nach außen stehende Spannflansche (6, 7) aufweist, welche durch eine in ein schwenkbares Gewindeelement (9) eingeschraubte Spannschraube (8) zusammenspannbar sind, wobei der erste Spannflansch (6) eine vom Schaft (8b) der Spannschraube (8) durchgriffene Durchstecköffnung (10) und der zweite Spannflansch (7) einen einseitig offenen Schlitz (11) hat, in welchen der Schaft (8b) der Spannschraube (8) beim Schließen der Rohrschelle (1) hinein schwenkbar ist, und wobei das Gewindeelement (9) durch ein federelastisches Rückstellelement (13) derart beaufschlagt ist, dass der Schaft (8b) der Spannschraube (8) beim Schließen der Rohrschelle (1) selbsttätig in den Schlitz (11) hineinschwenkt, sobald der Schraubenkopf (8a) der Spannschraube (8) den äußeren Rand des zweiten Spannflanschs (7) passiert hat,
**dadurch gekennzeichnet,**
**dass** das Gewindeelement (9) halbzylinderförmig mit einer konvexen Kontur (9a) auf einer Seite und einer gegenüberliegenden Flachseite (9b) ausgebildet ist, wobei die konvexe Kontur (9a) oder die Flachseite (9b) des Gewindeelements (9) kraftschlüssig mit dem Rückstellelement (13) zusammenwirkt,
und **dass** die konvexe Kontur (9a) des Gewindeelements (9) in einer konkaven Ausnehmung (12) einliegt, die in dem das Gewindeelement (9) abstützenden ersten Spannflansch (6) oder in dem auf das Gewindeelement (9) einwirkenden Rückstellelement (13) ausgeformt ist, wobei die Schwenkbewegung der Spannschraube (8) beim Schließen und/oder Öffnen der Rohrschelle (1) mit einem Drehen und/oder Abrollen des Gewindeelements (9) in der konkaven Ausnehmung (12) verbunden ist.

2. Rohrschelle nach dem Oberbegriff von Anspruch 1, **dadurch gekennzeichnet, dass** in dem ersten Spannflansch (6) eine konkave Ausnehmung (12) ausgeformt ist, und dass das Gewindeelement (9) zumindest auf der dem Schraubenkopf (8a) zugewandten Seite eine konvexe Kontur (9a) aufweist, die in der konkaven Ausnehmung (12) einliegt, wobei die Schwenkbewegungen der Spannschraube (8) beim Schließen der Rohrschelle (1) mit einem Drehen oder Abrollen des Gewindeelements (9) in der konkaven Ausnehmung (12) verbunden sind.

3. Rohrschelle nach Anspruch 1, **dadurch gekennzeichnet, dass** das Rückstellelement (13) mit einem Federbereich auf das Gewindeelement (9) einwirkt, wobei in diesem Federbereich eine konkave Ausnehmung (12) ausgeformt ist, und dass das Gewindeelement (9) auf der von dem Schraubenkopf (8a) abgewandten Seite eine konvexe Kontur (9a) aufweist, die in der konkaven Ausnehmung (12) einliegt, wobei die Schwenkbewegungen der Spannschraube (8) beim Schließen der Rohrschelle (1) mit einem Drehen und/oder Abrollen des Gewindeelements (9) in der konkaven Ausnehmung (12) verbunden ist.

4. Rohrschelle nach einem der Ansprüche 1 bis 3, **dadurch gekennzeichnet, dass** in das Gewindeelement (9) ein Gewinde mit mindestens drei Gewindegängen eingebracht ist.

5. Rohrschelle nach einem der vorherigen Ansprüche, **dadurch gekennzeichnet, dass** das federelastische Rückstellelement (13) durch eine aus Federstahl oder Kunststoff bestehende, im wesentlichen U-förmig oder V-förmig gebogene Federklammer gebildet ist, die von außen auf den ersten Spannflansch (6) aufgeschoben ist.

6. Rohrschelle nach Anspruch 5, **dadurch gekennzeichnet, dass** ein dem zweiten Spannflansch (7) zugewandter Bügel (14b) der Federklammer (13) einen zu seinem freien Ende hin offenen Schlitz (17) oder eine Öffnung (18) aufweist, in den der Schaft (8b) der Spannschraube (8) eingreift, bzw. durch die der Schaft (8b) der Spannschraube (8) hindurchgeht.

7. Rohrschelle nach den Ansprüchen 2 und 5, insbesondere in Kombination mit Anspruch 6, **dadurch gekennzeichnet, dass** ein mit der Flachseite (9b) des Gewindeelements (9) kraftschlüssig zusammenwirkender erster Bügel (14a) der Federklammer (13) an seinen beiden Seiten jeweils einen zum Gewindeelement (9) hin vorstehenden Haltesteg (15) aufweist, zwischen denen das Gewindeelement (9) in Richtung seiner Längsachse formschlüssig gehalten ist.

8. Rohrschelle nach den Ansprüchen 3 und 5, insbesondere in Kombination mit Anspruch 6, **dadurch gekennzeichnet, dass** ein an dem ersten Spannflansch (6) anliegender zweiter Bügel (14b) der Federklammer (13) an seinen beiden Seiten jeweils einen zum ersten Spannflansch (6) hin vorstehenden Haltesteg (15) aufweist, zwischen denen der erste Spannflansch (6) in Richtung seiner Längsachse formschlüssig gehalten ist.

9. Rohrschelle nach den Ansprüchen 2 und 5, insbesondere in Kombination mit Anspruch 6 und/oder 7, **dadurch gekennzeichnet, dass** ein dem zweiten Spannflansch (7) zugewandter Bügel (14b) der Federklammer (13) einen konkav ausgeformten Bereich aufweist, der auf der Rückseite der konkaven Ausnehmung (12) des ersten Spannflanschs (6) der Rohrschelle (1) anliegt.

10. Rohrschelle nach einem der vorherigen Ansprüche, **dadurch gekennzeichnet, dass** der Schellenkörper zweiteilig mit zwei voneinander getrennten Schellenhälften (2a, 2b) ausgeführt ist, die durch Verbindungsmittel gelenkig miteinander verbundenen sind, wobei eine Schellenhälfte (2a) mit einer Anschlussmutter (5) versehen ist.

11. Rohrschelle nach einem der vorherigen Ansprüche, **dadurch gekennzeichnet, dass** der Schlitz (11) im Spannflansch (7) an einer seiner ihn begrenzenden Seitenkanten eine Ausnehmung aufweist, in die der Schaft (8b) der Spannschraube (8) bei der in den Schlitz (11) hineingeschwenkten Position zumindest teilweise eingreift.

## Claims

1. A pipe clip (1) with a clip body, which comprises two clamping flanges (6, 7) standing approximately radially outwards, which can be clamped together by a tightening screw (8) screwed into a swivellable threaded element (9), wherein the first clamping flange (6) comprises a push-through opening (10) through which the shaft (8b) of the tightening screw (8) engages and the second clamping flange (7) comprises a slot (11) open on one side, into which the shaft (8b) of the tightening screw (8) can be swivelled when the pipe clip (1) is closed, and wherein the threaded element (9) is acted on by a spring-elastic restoring element (13), in such a way that the shaft (8b) of the tightening screw (8) automatically swivels into the slot (11) when the pipe clip (1) is closed, as soon as the screw head (8a) of the tightening screw (8) has passed the outer edge of the second clamping flange (7),
**characterised in that**
the threaded element (9) is constituted semi-cylindrical-shaped with a convex contour (9a) on one side and an opposite flat side (9b), wherein the convex contour (9a) or the flat side (9b) of the threaded element (9) cooperates in a non-positive manner with the restoring element (13),
and **in that** the convex contour (9a) of the threaded element (9) is located in a concave recess (12), which is formed in the first clamping flange (6) supporting the threaded element (9) or in the restoring element (13) acting on the threaded element (9), wherein the swivelling movement of the tightening screw (8) during closing and/or opening of the pipe clip (1) is associated with a rotation and/or rolling of the threaded element (9) in the concave recess (12).

2. The pipe clip according to the preamble of claim 1, **characterised in that** a concave recess (12) is formed in the first clamping flange (6), and **in that** the threaded element (9) comprises, at least on the side facing the screw head (8a), a convex contour (9a), which is located in the concave recess (12), wherein the swivelling movements of the tightening screw (8) during closing of the pipe clip (1) are associated with a rotation or rolling of the threaded element (9) in the concave recess (12).

3. The pipe clip according to claim 1, **characterised in that** the restoring element (13) acts, with a spring region, on the threaded element (9), wherein the concave recess (12) is formed in this spring region, and **in that** the threaded element (9), on the side facing away from the screw head (8a), comprises a convex contour (9a) which is located in the concave recess (12), wherein the swivelling movements of the tightening screw (8) during closing of the pipe clip (1) are associated with a rotation and/or rolling of the threaded element (9) in the concave recess (12).

4. The pipe clip according to any one of claims 1 to 3, **characterised in that** a thread with at least three thread turns is provided in the threaded element (9).

5. The pipe clip according to any one of the preceding claims, **characterised in that** the spring-elastic restoring element (13) is formed by a spring clip made of spring steel or plastic and bent essentially U-shaped or V-shaped, said spring clip being pushed from the exterior onto the first clamping flange (6).

6. The pipe clip according to claim 5, **characterised in that** a lug (14b) of the spring clip (13) facing the second clamping flange (7) comprises a slot (17), open towards its free end, or a hole (18), in which the shaft (8b) of the tightening screw (8) engages, or through which the shaft (8b) of the tightening screw (8) passes.

7. The pipe clip according to claims 2 and 5, in particular in combination with claim 6, **characterised in that** a first lug (14a) of the spring clip (13) cooperating in a non-positive manner with the flat side (9b) of the threaded element (9) comprises at each of its two sides a retention web (15) projecting towards the threaded element (9), between which the threaded element (9) is held in a form-fit manner in the direction of its longitudinal axis.

8. The pipe clip according to claims 3 and 5, in particular in combination with claim 6, **characterised in that** a second lug (14b) of the spring clip (13) lying adjacent to the first clamping flange (6) comprises at each of its two sides a retention web (15) projecting towards the first clamping flange (6), between which the first clamping flange (6) is held in a form-fit manner in the direction of its longitudinal axis.

9. The pipe clip according to claims 2 and 5, in particular in combination with claim 6 and/or 7, **characterised in that** a lug (14b) of the spring clip (13) facing the second clamping flange (7) comprises a concave-shaped region, which is located on the rear side of the concave recess (12) of the first clamping flange (6) of the pipe clip (1).

10. The pipe clip according to any one of the preceding claims, **characterised in that** the clip body is constituted in two parts with two clip halves (2a, 2b) separated from one another, which are connected to one another in an articulated manner by connection means, wherein one clip half (2a) is provided with a connecting nut (5).

11. The pipe clip according to any one of the preceding claims, **characterised in that** the slot (11) in the clamping flange (7) comprises, on one of its side edges bordering it, a recess in which the shaft (8b) of the tightening screw (8) at least partially engages in the position swivelled into the slot (11).

## Revendications

1. Collier de tuyau (1), comprenant un corps de collier présentant deux brides de serrage (6, 7) faisant saillie vers l'extérieur de manière approximativement radiale et qui peuvent être serrés ensemble par une vis de serrage (8) vissée dans un élément taraudé (9) pivotant, dans lequel la première bride de serrage (6) présente une ouverture de passage (10) traversée par la tige (8b) de la vis de serrage (8), et la deuxième bride de serrage (7) présente une fente (11) ouverte d'un côté dans laquelle peut pivoter la tige (8b) de la vis de serrage (8) lors de la fermeture du collier de tuyau (1), et dans lequel l'élément taraudé (9) est sollicité par un élément de rappel faisant ressort (13) de telle sorte que lors de la fermeture du collier de tuyau (1), la tige (8b) de la vis de serrage (8) pivote automatiquement dans la fente (11) dès que la tête de vis (8a) de la vis de serrage (8) a dépassé le bord extérieur de la deuxième bride de serrage (7),
**caractérisé en ce que**
l'élément taraudé (9) est réalisé de forme hémicylindrique avec d'un côté un contour convexe (9a) et un côté plat (9b) opposé, le contour convexe (9a) ou le côté plat (9b) de l'élément taraudé (9) coopérant par adhérence avec l'élément de rappel (13),
et **en ce que** le contour convexe (9a) de l'élément taraudé (9) est placé dans un creux concave (12) configuré dans la première bride de serrage (6) supportant l'élément taraudé (9) ou dans l'élément de rappel (13) agissant sur l'élément taraudé (9), dans lequel le mouvement pivotant de la vis de serrage (8) lors de la fermeture et/ou de l'ouverture du collier de tuyau (9) est associé à une rotation et/ou un roulement de l'élément taraudé (9) dans le creux concave (12).

2. Collier de tuyau selon le préambule de la revendication 1, **caractérisé en ce qu'**un creux concave (12) est configuré dans la première bride de serrage (6), et **en ce que** l'élément taraudé (9) présente un contour convexe (9a) au moins du côté tourné vers la tête de vis (8a), ledit contour étant placé dans le creux concave (12), dans lequel les mouvements pivotants de la vis de serrage (8) lors de la fermeture du collier de tuyau (1) sont associés à une rotation ou un roulement de l'élément taraudé (9) dans le creux concave (12).

3. Collier de tuyau selon la revendication 1, **caractérisé en ce que** l'élément de rappel (13) agit avec une zone de ressort sur l'élément taraudé (9), dans lequel un creux concave (12) est configuré dans ladite zone de ressort, et **en ce que** l'élément taraudé (9) présente un contour convexe (9a) du côté détourné de la tête de vis (8a), ledit contour étant placé dans le creux concave (12), dans lequel les mouvements pivotants de la vis de serrage (8) lors de la fermeture du collier de tuyau (1) sont associés à une rotation ou un roulement de l'élément taraudé (9) dans le creux concave (12).

4. Collier de tuyau selon l'une quelconque des revendications 1 à 3, **caractérisé en ce qu'**un taraudage à au moins trois pas de filet est réalisé sur l'élément taraudé (9).

5. Collier de tuyau selon l'une quelconque des revendications précédentes, **caractérisé en ce que** l'élément de rappel faisant ressort (13) est formé par une pince à ressort en acier à ressort ou matière plastique, pliée substantiellement en forme de U ou en forme de V, et emmanchée sur la première bride de serrage (6) depuis l'extérieur.

6. Collier de tuyau selon la revendication 5, **caractérisé en ce qu'**une attache (14b) de la pince à ressort (13), tournée vers la deuxième bride de serrage (7), présente une fente (17) ou une ouverture (18) ouverte vers son extrémité libre et qui est mise en prise par la tige (8b) de la vis de serrage (8) ou par laquelle passe la tige (8b) de la vis de serrage (8).

7. Collier de tuyau selon les revendications 2 et 5, en particulier en combinaison avec la revendication 6, **caractérisé en ce qu'**une première attache (14a) de la pince à ressort (13), coopérant par adhérence avec le côté plat (9b) de l'élément taraudé (9), présente sur ses deux côtés respectivement une nervure de retenue (15) en saillie vers l'élément taraudé (9) et entre lesquels l'élément taraudé (9) est retenu par complémentarité de forme dans le sens de son axe longitudinal.

8. Collier de tuyau selon les revendications 3 et 5, en particulier en combinaison avec la revendication 6, **caractérisé en ce qu'**une deuxième attache (14b) de la pince à ressort (13), adjacente à la première bride de serrage (6), présente sur ses deux côtés respectivement une nervure de retenue (15) en saillie vers la première bride de serrage (6) entre lesquels la première bride de serrage (6) est retenue par complémentarité de forme dans le sens de son axe longitudinal.

9. Collier de tuyau selon les revendications 2 et 5, en particulier en combinaison avec la revendication 6 et/ou 7, **caractérisé en ce qu'**une attache (14b) de la pince à ressort (13), tournée vers la deuxième bride de serrage (7), présente une zone de configuration concave qui est adjacente à la face arrière du creux concave (12) de la première bride de serrage (6) du collier de tuyau (1).

10. Collier de tuyau selon l'une quelconque des revendications précédentes, **caractérisé en ce que** le corps de collier est réalisé en deux parties avec deux moitiés de collier (2a, 2b) séparées l'une de l'autre et qui sont reliées ensemble de manière articulée à l'aide de moyens de connexion, dans lequel une moitié de collier (2a) est munie d'un écrou raccord (5).

11. Collier de tuyau selon l'une quelconque des revendications précédentes, **caractérisé en ce que** la fente (11) dans la bride de serrage (7) présente sur l'un de ses bords latéraux la délimitant un creux qui est mis en prise au moins en partie par la tige (8b) de la vis de serrage (8) dans la position pivotée dans la fente (11).
